# EUROPEAN PATENT APPLICATION

(11) **EP 4 773 323 A1**
(43) Date of publication of application: **08.07.2026**
(21) Application number: 24859720.5
(22) Date of filing: 26.08.2024
(51) Int. Cl.: H01M 10/0587, H01M 50/414, H01M 50/443, H01M 50/446, H01M 50/451, H01M 50/46, H01M 50/463

(54) **LITHIUM SECONDARY BATTERY**

(30) Priority: 31.08.2023 JP 2023141236
(71) Applicant: Panasonic Intellectual Property Management Co., Ltd., Kadoma-shi, Osaka 571-0057 (JP)
(72) Inventor: KONDO, Shinichiro, Kadoma-shi, Osaka 571-0057 (JP); MIYAMAE, Ryohei, Kadoma-shi, Osaka 571-0057 (JP); KANO, Akira, Kadoma-shi, Osaka 571-0057 (JP)
(74) Representative: Novagraaf International SA
(86) International application number: PCT/JP2024/030328
(87) International publication number: WO 2025/047688

(57) **Abstract**

A lithium secondary battery includes a positive electrode, a negative electrode, a separator provided between the positive electrode and the negative electrode, and a nonaqueous electrolyte. In the negative electrode, lithium metal deposits during charging and the lithium metal dissolves during discharging. The separator includes a sheet-shaped substrate and a spacer provided on one or both of the main surface of the substrate. The spacer includes protrusions. The relationship of Y < X is satisfied, where X denotes a ratio: St/S of a total area St of at least one part At where the protrusion and a region A where the substrate faces the positive electrode overlap to an area S of the region A, and Y denotes a ratio: Lt/L of a total length Lt of at least one part where the protrusion and any of the edges of the positive electrode along the outer shape of the positive electrode overlap to a total length L of the edges.

## Description

### [Technical Field]

The present disclosure relates to a lithium secondary battery.

### [Background Art]

Lithium-ion batteries are known as high-capacity nonaqueous electrolyte secondary batteries. Lithium secondary batteries (lithium-metal secondary batteries) are promising nonaqueous electrolyte secondary batteries with a high capacity that surpass the lithium ion batteries. In a lithium secondary battery, lithium metal deposits on its negative electrode during charging, and the lithium metal dissolves during discharging to be released into the nonaqueous electrolyte as lithium ions.

Due to deposition of lithium metal on the negative electrode during charging, the lithium secondary battery is required to include a spacer between a substrate of a separator and the electrode for ensuring space between the separator and the electrode.

Patent Literature 1 proposes "a lithium secondary battery including a positive electrode, a negative electrode, a separator provided between the positive electrode and the negative electrode, and a nonaqueous electrolyte having lithium ion conductivity, wherein lithium metal deposits on the negative electrode during charging, the lithium metal dissolves from the negative electrode during discharging, a spacer is provided between the separator and at least one of the positive electrode and the negative electrode, a first length of the separator in a first direction D1 is smaller than a second length thereof in a second direction D2 intersecting the first direction D1, and in a section of the spacer cut along the thickness direction of the separator and the first direction D1, at least one of a spacer-side angle formed between the separator and the spacer and a spacer-side angle formed between the electrode in contact with the spacer and the spacer is larger than 90°.

### [Citation List]

### [Patent Literature]

Patent Literature 1: International Publication WO 2021/192645

### [Summary of Invention]

### [Technical Problem]

Stresses caused by Li deposition on the negative electrode are locally concentrated in the vicinity of the overlap between the edges of the positive electrode and the protrusions (spacer), which may damage the substrate to cause internal short circuits.

### [Solution to Problem]

One aspect of the present disclosure relates to a lithium secondary battery including: a positive electrode; a negative electrode; a separator provided between the positive electrode and the negative electrode; and a nonaqueous electrolyte, wherein in the negative electrode, lithium metal deposits during charging and the lithium metal dissolves during discharging, the separator includes a substrate having a sheet shape and a spacer provided on one or both of main surfaces of the substrate, the spacer includes protrusions, and a relationship of Y < X is satisfied, where X denotes a ratio: St/S of a total area St of at least one part At where a region A and the protrusions overlap each other to an area S of the region A, the region A being a region where the substrate faces the positive electrode, and Y denotes a ratio: Lt/L of a total length Lt of at least one part where the protrusions and any of edges of the positive electrode along an outer shape of the positive electrode overlap each other to a total length L of the edges.

### [Advantageous Effects of Invention]

According to the present disclosure, occurrence of internal short circuits in a lithium secondary battery can be suppressed.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] FIG. 1 is a schematic longitudinal cross-sectional view of an exemplary lithium secondary battery according to an embodiment of the present disclosure.
[FIG. 2] FIG. 2 is a schematic cross-sectional view of main components of the lithium secondary battery illustrated in FIG. 1.
[FIG. 3] FIG. 3 is a top view of an example of a spacer.
[FIG. 4] FIG. 4 is a top view of another example of the spacer.
[FIG. 5] FIG. 5 is a top view of still another example of the spacer.
[FIG. 6] FIG. 6 is a top view of still another example of the spacer.
[FIG. 7] FIG. 7 is a top view of yet another example of the spacer.
[FIG. 8] FIG. 8 is a top view of a spacer included in a battery B1 of a comparative example.
[FIG. 9] FIG. 9 is a top view of a spacer included in a battery B2 of a comparative example.

### [Description of Embodiments]

Embodiments of the present disclosure are described below by way of examples, but the present disclosure is not limited to the examples described below. In the following description, specific numerical values and materials may be exemplified in some cases, but other numerical values and other materials may be adopted as long as the effects of the present disclosure can be obtained. In the present description, the phrase "a numerical value A to a numerical value B" means to include the numerical value A and the numerical value B, and can be phrased as "a numerical value A or more and a numerical value B or less". In the following description, when the lower and upper limits of numerical values related to specific physical properties, conditions, or the like are mentioned as examples, any of the mentioned lower limits and any of the mentioned upper limits can be combined in any combination as long as the lower limit is not equal to or more than the upper limit. When a plurality of materials are mentioned as examples, one type of them may be selected and used singly, or two or more types of them may be used in combination.

### (Lithium Secondary Battery)

A lithium secondary battery according to an embodiment of the present disclosure includes a positive electrode, a negative electrode, a separator provided between the positive electrode and the negative electrode, and a nonaqueous electrolyte. The positive electrode includes, for example, a positive electrode current collector and a positive electrode mixture layer supported on both sides or one side of the positive electrode current collector. In the negative electrode, lithium metal deposits during charging and the lithium metal dissolves during discharging. Specifically, the negative electrode includes at least a negative electrode current collector, and lithium metal deposits on the negative electrode current collector during charging. The nonaqueous electrolyte has lithium ion conductivity. The lithium secondary battery is also referred to as a lithium-metal secondary battery.

In the lithium secondary battery, for example, 70% or more of the rated capacity is exhibited by deposition and dissolution of lithium metal. Electron migration in the negative electrode during charging and discharging is mainly due to deposition and dissolution of lithium metal in the negative electrode. Specifically, 70 to 100% (e.g., 80 to 100% or 90 to 100%) of the electron migration (in another aspect, current) in the negative electrode during charging and discharging is due to deposition and dissolution of lithium metal. That is, the negative electrode of the lithium secondary battery differs from a negative electrode in which electron migration in the negative electrode during charging and discharging is mainly due to absorption and release of lithium ions of a negative electrode active material (e.g., graphite).

The separator includes a substrate having a sheet shape and a spacer provided on the main surface of the substrate. The spacer includes protrusions. The relationship of Y < X is satisfied where X denotes a ratio: St/S of a total area St of at least one part At where the protrusions and a region A where the substrate faces the positive electrode (the positive electrode mixture layer) overlap each other to an area S of the region A, and Y denotes a ratio: Lt/L of a total length Lt of at least one part where the protrusions and any of the edges of the positive electrode along the outer contour of the positive electrode (the positive electrode mixture layer) overlap each other to a total length L of the edges of the positive electrode. When there are a plurality of overlaps of any edges of the positive electrode and any of the protrusions, the total length Lt is the total length of the plurality of overlaps.

As a result of the relationship of Y < X being satisfied, the concentration of the stress caused by Li deposition in the vicinity of an overlap of a positive electrode edge and a protrusion is reduced to reduce the damage of the substrate due to the stress concentration, thereby suppressing the occurrence of internal short circuits due to the substrate damage.

For example, when the protrusions are uniformly distributed on the main surface of the substrate (the positive electrode), the space is more likely to be stably formed by the spacer in the entire electrode group as the arrangement rate of the protrusions increases. The required amount of the space is determined according to the actual battery designs, and the arrangement rate of the protrusions is set based on the required amount of the space. When the protrusions are uniformly distributed, the arrangement rate of the protrusions is approximately the same between the edges of the positive electrode and the part other than the edges. By contrast, in the present disclosure, the above-described stress concentration can be reduced by making the arrangement rate of the protrusions smaller in the edges of the positive electrode (the part of the positive electrode that faces the edges) than in the part other than the edges so as to satisfy Y < X. Since the part where the arrangement rate of the protrusions is reduced is limited to the part corresponding to the edges of the positive electrode, the influence on the formation of the space between the positive electrode and the negative electrode, which is due to reduction of the arrangement rate of the protrusions, is very small and suppressed to a minimum.

From the viewpoint of suppressing damages of the substrate due to the above-described stress concentration, Y < 2X/3 is preferably satisfied, and Y < X/3 is more preferably satisfied.

From the viewpoint of suppressing damages of the substrate due to the above-described stress concentration, Y may be 0.4 or less, may be 0.3 or less, may be 0.1 or less or 0.05 or less, or may be 0. From the viewpoint that the space can be stably formed in the entirety of the region A, Y may be greater than 0, may be 0.01 or more, or 0.05 or more. The range of Y may be 0 or more and 0.4 or less, for example.

From the viewpoint that the space can be stably formed by the protrusions in the region A, X may be 0.03 or more, or may be 0.05 or more. From the viewpoint of ensuring the volume of Li deposited in the region A, X may be 0.45 or less, may be 0.3 or less, or may be 0.2 or less.

In a plan view, the positive electrode has an outer shape of a rectangle, for example. In the case, the edges of the positive electrode (the positive electrode mixture layer) include a first edge to a fourth edge corresponding to the respective four sides of the rectangle. Where Yn denotes a ratio: Lnt/Ln of a total length Lnt of at least one part where the protrusions and an n-th edge selected from the first edge to the fourth edge overlap each other to a length Ln of the n-th edge (the positive electrode mixture layer included in the n-th edge), it is preferable to satisfy the relationship of Yn < X in any of the cases where n is 1 to 4. When n is 1 to 4, Yn is preferably 0 or more and 0.4 or less. n is an integer from 1 to 4.

The protrusions are preferably arranged so as not to overlap the edges of the positive electrode (the positive electrode mixture layer). The region where the protrusions are formed may be adjusted so that the protrusions do not overlap an edge (the n-th edge) of the positive electrode (the positive electrode mixture layer). When the protrusions are line-shaped, the line-shaped protrusions may be intermittently arranged to provide blank portions.

The positive electrode, the negative electrode, and the separator may be collectively referred to as an "electrode group". The lithium secondary battery may include a wound electrode group in which a band-shaped positive electrode and a band-shaped negative electrode are wound with a separator (substrate) therebetween. Alternatively, the lithium secondary battery may include a stack electrode group in which the positive electrode and the negative electrode are stacked with a separator (substrate) therebetween.

In a lithium secondary battery, usually, the area of the negative electrode facing the positive electrode is larger than the area of the positive electrode, and the negative electrode is positioned so as to face the entirety of one or both of the main surfaces of the positive electrode (the positive electrode mixture layer formed on one or both of the main surfaces of the positive electrode) with the separator therebetween.

Negative electrodes and separators may be arranged on both sides of the positive electrode. That is, the negative electrodes may be arranged to face both main surfaces of the positive electrode (the positive electrode mixture layer formed on both main surfaces of the positive electrode) with the separators therebetween. In the case of a wound electrode group, the negative electrodes and the separators are arranged on both sides (outer circumferential side and inner circumferential side) of the positive electrode. In this case, the separator positioned on at least one side of the positive electrode satisfies the relationship of Y < X. It is preferable that the separator positioned on both sides of the positive electrode satisfy the relationship of Y < X.

The spacer on both sides (the outer peripheral side and the inner peripheral side) of the positive electrode may be positioned so as to overlap each other with the positive electrode therebetween, or may be positioned so as to be entirely or partially displaced from each other. Insulating layers provided on both sides (the outer peripheral side and the inner peripheral side) of the positive electrode may be arranged so as to overlap each other with the positive electrode therebetween, or may be arranged so as to be entirely or partially displaced from each other. The spacer provided on both sides (the outer peripheral side and the inner peripheral side) of the positive electrode may have the same pattern or patterns different from each other.

The negative electrode and the separator may be provided on one side of the positive electrode. That is, the negative electrode may be positioned to face one of the main surfaces of the positive electrode (the positive electrode mixture layer formed on one of the main surfaces of the positive electrode) with the separator therebetween. In this case, the separator positioned on one side of the positive electrode satisfies the relationship of Y < X.

### (Separator)

The separator includes a substrate having a sheet shape and a spacer provided on the main surface of the substrate.

### (Substrate)

As the substrate, a porous sheet having ion permeability and insulating properties is used. Examples of the porous sheet include a microporous thin film, a woven fabric, and a nonwoven fabric. The material of the porous sheet is not particularly limited, and may be a polymer material. Examples of the polymer material include olefin resin, polyamide resin, and cellulose. Examples of the olefin resin include polyethylene, polypropylene, and copolymers of ethylene and propylene. The substrate may contain an additive, as necessary. Examples of the additive include inorganic fillers.

The thickness of the substrate is not particularly limited, but is, for example, 5 µm or more and 20 µm or less, and more preferably 10 µm or more and 20 µm or less.

The substrate may include a porous sheet and a composite material layer (heat resistant layer). The composite material layers may be formed on one or both of the main surfaces of the porous sheet. The composite material layer is a layer that allows lithium ion permeation. The composite material layer contains inorganic particles. The composite material layer may contain a resin material, as necessary. The thickness of the composite material layer may be from 5% to 50% of the total thickness of the substrate.

The composite material layer may be positioned on the side of the porous sheet that faces the positive electrode or may be positioned on the side of the porous sheet that faces the negative electrode. When the composite material layer is positioned on the side of the positive electrode, degradation of the porous sheet due to oxidation reactions can be suppressed. When the composite material layer is located on the side of the negative electrode, deterioration of the porous sheets due to reduction can be suppressed. The spacer may be positioned on the composite material layer. In this case, the effect of suppressing the heat shrinkage of the substrate is particularly pronounced.

The inorganic particles are preferably particles of a thermally stable and insulative inorganic compound that are unlikely to melt and decompose upon abnormal heat generation due to, for example, short circuits of the battery. Examples of the material of the inorganic particles include oxides, hydroxides, nitrides, carbides, and sulfides. Examples of the oxides include aluminum oxide, boehmite, magnesium oxide, titanium oxide, zirconium oxide, silicon oxide, yttrium oxide, and zinc oxide. Examples of the nitrides include silicon nitride, aluminum nitride, boron nitride, and titanium nitride. Examples of the carbides include silicon carbide and boron carbide. Example of the sulfides include barium sulfide. Examples of the hydroxides include aluminum hydroxide. The median diameter of the inorganic particles in the volume-based particle size distribution may be from 0.2 to 2.0 µm.

The median diameter of the inorganic particles in the volume-based particle size distribution can be measured, for example, using a laser diffraction/scattering particle size distribution measuring device (e.g., MICROTRAC manufactured by NIKKISO CO., LTD.). Alternatively, it is possible that a cross section of the substrate is observed using a transmission electron microscope (TEM), a TEM image is captured, the respective areas surrounded by the outlines of any 100 inorganic particles are calculated, the diameters of equivalent circles (true circles) having the same areas as the calculated areas are obtained, and the average of the diameters of the 100 equivalent circles is obtained as the average diameter.

Examples of the resin material contained in the composite material layer (heat resistant layer) include fluorocarbon resins such as polyvinylidene fluoride (PVdF) and polytetrafluoroethylene, fluorine-containing rubbers such as polyvinylidene fluoride-tetrafluoroethylene copolymers and ethylene-tetrafluoroethylene copolymers, styrene-butadiene copolymers and hydrides thereof, acrylonitrile-butadiene copolymers and hydride thereof, methacrylate-acrylic acid ester copolymers, styrene-acrylic acid ester copolymers, acrylonitrile-acrylic acid ester copolymers, rubbers such as ethylene propylene rubber and polyvinyl acetate, cellulose derivatives of, for example, ethylcellulose, methylcellulose, hydroxyethylcellulose, and carboxymethylcellulose, acrylic resins such as acrylic acid-methacrylic acid copolymers, polyphenylene ether, polysulfone, polyethersulfone, polyphenylene sulfide, polyether imide, polyimide, polyamides such as wholly aromatic polyamide (aramid), polyamide-imide, polyacrylonitrile, polyvinyl alcohol, polyether, polyacrylic acid, polymethacrylic acid, polyester, polyolefin, silicone resin, urethane resin, melamine resin, urea resin, and epoxy resin.

As the resin material contained in the composite material layer (heat resistant layer), a polymer material having a heat resistance higher than that of the porous sheet is preferably used. The polymer material such as above preferably includes at least one selected from the group consisting of aromatic polyamide, aromatic polyimide, and aromatic polyamide-imide. These are known as polymer materials having high heat resistance. In terms of heat resistance, an aramid, that is, a meta-aramid (wholly aromatic meta-polyamide) or a para-aramid (wholly aromatic meta-polyamide) is preferable.

The content of the inorganic particles in the composite material layer may be in the range of 50% by mass to 99% by mass (e.g., in the range of 85% by mass to 99% by mass).

The composite material layer is formed, for example, by applying a coating liquid containing inorganic particles, a resin material, and a liquid component (a dispersion medium) to a porous sheet, and drying the coated film. Examples of the liquid component include N-methyl-2-pyrrolidone.

### (Spacer)

The spacer is formed on the main surface of the substrate. Preferably, the substrate and the spacer are integrated with each other from the viewpoint of electrode group manufacturing ease. The spacer may be provided on the main surface of the substrate that faces the positive electrode (the main surface of the substrate located on the side of the positive electrode), may be provided on the main surface of the substrate that faces the negative electrode (the main surface of the substrate located on the side of the negative electrode), or may be provided on both of the main surfaces. In the case where the spacer is provided on the main surface of the substrate that faces the positive electrode, Li deposits so as to stretch the substrate toward the positive electrode between turns of the spacer as compared with the case where the spacer is provided on the main surface of the substrate that faces the negative electrode. Accordingly, compressive stress is generated in the deposited Li and Li is likely to deposit densely. From the viewpoint of improving discharge efficiency and cycle characteristics, the spacer is preferably provided on the main surface of the substrate that faces the positive electrode. By contrast, when the spacer is provided on the main surface of the substrate that faces the negative electrode, since space is formed in advance between the substrate and the negative electrode, the tensile loads on the substrate generated following the deposition of Li are reduced. That is, the advantage lies in the ease of maintaining the insulating properties of the substrate or maintaining the short-circuit resistance of the substrate.

The main function of the spacer in the lithium secondary battery is to form space in which lithium metal is to deposit. As a result of the lithium metal being accommodated in the space ensured by the spacer, the expansion of the negative electrode during charging is suppressed.

The spacer may contain a resin material (e.g., an insulative resin) and may contain a resin material and particles. The proportion of the resin material in the spacer may be 10% by volume or more, 30% by volume or more, or 50% by volume or more, and may be 100% by volume or less, or 80% by volume or less.

Examples of the resin material contained in the spacer include fluorocarbon resins such as polyvinylidene fluoride (PVdF) and polytetrafluoroethylene, fluorine-containing rubbers such as vinylidene fluoride-tetrafluoroethylene copolymers and ethylene-tetrafluoroethylene copolymers, styrene-butadiene copolymers and hydrides thereof, acrylonitrile-butadiene copolymers and hydrides thereof, methacrylate-acrylic acid ester copolymers, styrene-acrylic acid ester copolymers, acrylonitrile-acrylic acid ester copolymers, rubbers such as ethylene propylene rubber and polyvinyl acetate, cellulose derivatives of, for example, ethylcelluose, methylcellulose, hydroxyethylcellulose, and carboxymethylcellulose, acrylic resins such as acrylic acid-methacrylic acid copolymers, polyphenylene ether, polysulfone, polyethersulfone, polyphenylene sulfide, polyether imide, polyimide, polyamide such as wholly aromatic polyamide (aramid), polyamide-imide, polyacrylonitrile, polyvinyl alcohol, polyether, polyacrylic acid, polymethacrylic acid, polyester, polyolefin, silicone resin, urethane resin, melamine resin, urea resin, and epoxy resin.

Among the above resin materials, polyimide, polyvinylidene fluoride, and acrylonitrile-acrylic acid ester copolymers are preferable, for example, as materials that do not allow lithium ion permeation, and polyimide may be used. A non-porous spacer having a certain height or more formed of any of these resin materials is a layer that does not allow lithium ion permeation. From the viewpoint of suppressing an increase in the gas generation reaction rate upon occurrence of internal short circuits, it is preferable to provide such a spacer.

The particles may be inorganic particles or organic particles. Among these, insulative inorganic particles of metal oxide, metal hydroxide, metal nitride, metal carbide, or metal sulfide can be exemplified. Preferable examples of the metal oxide include aluminum oxide (alumina or boehmite), magnesium oxide, titanium oxide (titania), zirconium oxide, and silicon oxide (silica). Examples of the metal hydroxide include aluminum hydroxide. Examples of the metal nitride include silicon nitride, aluminum nitride, boron nitride, and titanium nitride. Examples of the metal carbide include silicon carbide and boron carbide. Examples of the metal sulfide include barium sulfide. Alternatively, a mineral such as aluminosilicate, layered silicate, barium titanate, or strontium titanate may be used. Among these, alumina, silica, or titania is preferably used, for example.

The average particle diameter of the particles is not particularly limited, and may be 0.1 µm or more or 0.5 µm or more, and may be 10 µm or less, 5 µm or less, or 2 µm or less. The average diameter of the particles can be measured in the following manner. First, a cross section of the spacer in the thickness direction of the separator is photographed using an electron microscope to obtain an image of the cross section. Next, the image is subjected to an image processing such as binarization to identify particle parts. Next, the diameters (equivalent circle diameters) of circles having the same areas as the areas of the respective particles in the cross section are determined, and the arithmetic average of the determined equivalent circle diameters is taken as the average diameter of the particles. The arithmetic average can be obtained from 100 or more particles, for example. The average particle diameter of the other particles included in the electrode plate and the separator can also be determined in the same manner.

When the spacer contains a resin material and particles, the content of the particles in the spacer is preferably 50% by volume or less. This makes it easy to ensure sufficient strength of the spacer.

The spacer includes protrusions. The spacer may include either or both line-shaped protrusions and dot-shaped protrusions. In one aspect, the line-shaped protrusions are ridge-shaped protrusions. The line-shaped protrusions may be arranged intermittently or continuously. The line-shaped protrusions may be linear or curved.

The width of the line-shaped protrusion may be 100 µm or more or 200 µm or more, and may be 2000 µm or less or 1000 µm or less.

The spacer preferably has a predetermined repeating pattern. In other words, it is preferable that the protrusions are arranged in a predetermined repeating pattern. The line-shaped protrusions may be arranged in a stripe pattern or may be arranged in a mesh pattern. The mesh pattern may be an aggregate of polygons. One example of the mesh pattern includes a shape in which polygons are combined so as to share their sides. Examples of the polygons include triangles, squares, and hexagons. Different types of polygons may be combined. The mesh pattern may be a honeycomb pattern. Alternatively, the dot-shaped protrusions may be arranged in a predetermined repeating pattern.

A height H of the spacer (protrusions) may be larger than a thickness T of the substrate. A ratio: H/T of the height H to the thickness T is larger than 1, and may be 1.5 or more, 2 or more, or 3 or more. H/T may be 10 or less, 8 or less, 5 or less, or 4 or less. As a result of H/T being set to 1.5 or more, the expansion of the electrode group can be particularly suppressed.

The height H can be measured in the following manner. First, a cross section of the separator (substrate) in the thickness direction is photographed using an electron microscope to obtain an image of the cross section. Next, any 20 points on the spacer are selected in the image, and the height of the spacer at each point is measured. Next, the measured heights of the 20 points are arithmetically averaged, and the obtained average value is taken as the height H. The thickness T can be measured also by a similar procedure.

The spacer is formed, for example, by applying a coating liquid containing a component of the spacer and a liquid component to a predetermined portion of the substrate, and drying the coated film. Example of the liquid component include N-methyl-2-pyrrolidone. The coating may be performed using a dispenser or the like, or may be performed by a known printing method such as gravure printing, inkjet printing, or screen printing. Further, the drying may be performed by a known method such as drying by heating or natural drying.

### (Negative Electrode)

The negative electrode includes a negative electrode current collector. In the lithium secondary battery, lithium metal deposits on the surface of the negative electrode by charging. More specifically, lithium ions contained in the nonaqueous electrolyte receive electrons on the negative electrode by charging to become lithium metal and the lithium metal deposits on the surface of the negative electrode. The lithium metal deposited on the surface of the negative electrode dissolves in the nonaqueous electrolyte as lithium ions by discharging.

The negative electrode may include a lithium ion absorption layer (a layer exhibiting capacity by a negative electrode active material (e.g., graphite) absorbing and releasing lithium ions) supported on the negative electrode current collector. In this case, the open-circuit potential of the negative electrode in the fully charged state may be 70 mV or less relative to the lithium metal (the dissolution and deposition potential of lithium). When the open-circuit potential of the negative electrode in the fully charged state is 70 mV or less relative to the lithium metal, lithium metal is present on the surface of the lithium ion absorption layer in the fully charged state. That is, the negative electrode exhibits capacity by lithium metal deposition and dissolution.

Here, the fully charged state is a state of a battery charged until a state of charge of, for example, 0.98 × C or more is achieved, where C represents the rated capacity of the battery. The open-circuit potential of the negative electrode in the fully charged state may be measured by disassembling a battery in the fully charged state in an argon atmosphere to take out the negative electrode, and assembling a cell with the negative electrode and a lithium metal as a counter electrode for measurement. The nonaqueous electrolyte in the cell may have the same composition as the nonaqueous electrolyte in the disassembled battery.

The lithium-ion absorption layer is a layer formed by forming a negative electrode mixture containing a negative electrode active material into a layer shape. The negative electrode mixture may contain, for example, a binder, a thickener, and a conductive agent in addition to the negative electrode active material.

Examples of the negative electrode active material include carbonaceous materials, Si-containing materials, and Sn-containing materials. The negative electrode may contain one negative electrode active material, or may contain two or more negative electrode active materials in combination. Examples of the carbonaceous materials include graphite, graphitizable carbon (soft carbon), and non-graphitizable carbon (hard carbon).

The conductive material is a carbon material, for example. Examples of the carbon material include carbon black, acetylene black, Ketjen black, carbon nanotubes, and graphite.

Examples of the binder include fluorocarbon resin, polyacrylonitrile, polyimide resin, acrylic resin, polyolefin resin, and rubbery polymer. Examples of the fluorocarbon resin include polytetrafluoroethylene and polyvinylidene fluoride.

The negative electrode current collector may be a conductive sheet. As a conductive sheet, a foil or a film is used, for example.

The material of the negative electrode current collector (conductive sheet) may be a conductive material other than lithium metal and lithium alloys. The conductive material may be a metal material such as a metal or an alloy. The conductive material is preferably a material that does not react with lithium. More specifically, a material that does not form either an alloy or an intermetallic compound with lithium is preferable. Examples of the conductive material such as above include copper (Cu), nickel (Ni), iron (Fe), alloys containing any of these metal elements, and graphite whose basal plane is preferentially exposed. Examples of the alloys include copper alloys and stainless steel (SUS). Among these, either or both copper and a copper alloy, which have high conductivity, are preferable.

The thickness of the negative electrode current collector is not particularly limited, but is 5 µm or more and 300 µm or less, for example.

### (Positive Electrode)

The positive electrode includes a positive electrode current collector and a positive electrode mixture layer supported on the positive electrode current collector, for example. The positive electrode mixture layer contains a positive electrode active material, a conductive material, and a binder, for example. The positive electrode mixture layer may be formed on only one or both surfaces of the positive electrode current collector. The positive electrode can be obtained, for example, by applying a positive electrode mixture slurry containing a positive electrode active material, a conductive material, and a binder to both surfaces of the positive electrode current collector, followed by drying and rolling the applied film.

The positive electrode active material is a material that absorbs and releases lithium ions. Examples of the positive electrode active material include lithium-containing transition metal oxides, transition metal fluorides, polyanions, fluorinated polyanions, and transition metal sulfides. Among these, a lithium-containing transition metal oxide is preferable due to its low manufacturing costs and a high-average discharge voltage.

Lithium contained in a lithium-containing transition metal oxide is released from the positive electrode as lithium ions during charging and deposits on the negative electrode or the negative electrode current collector as lithium metal. During discharging, the lithium metal dissolves from the negative electrode and releases lithium ions to be absorbed in the composite oxide of the positive electrode. That is, the lithium ions involved in charging and discharging are generally derived from the solute of the nonaqueous electrolyte and the positive electrode active material.

Examples of a transition metal element contained in the lithium-containing transition metal oxide include Sc, Ti, V, Cr, Mn, Fe, Co, Ni, Cu, Y, Zr, and W. The lithium-containing transition metal oxide may contain one transition metal element or two or more transition metal elements. The transition metal element may include Ni and either or both Co and Mn. The lithium-containing transition metal oxide can contain one or more typical elements, as necessary. Examples of the typical elements include Mg, Al, Ca, Zn, Ga, Ge, Sn, Sb, Pb, and Bi. One such element may be Al, for example.

Among lithium-containing transition metal oxides, a composite oxide that contains Ni and either or both Co and Mn as transition metal elements, that may contain Al as an optional component, and that has a rock-salt-type crystalline structure with a layered structure is preferable from the viewpoint of achieving high capacity. In the lithium secondary battery in this case, the molar ratio: mLi/mM of a total amount mLi of lithium in the positive electrode and the negative electrode to an amount mM of a metal M contained in the positive electrode other than lithium is set to 1.1 or less, for example.

As the binder, the conductive agent, and the like, those exemplified for the negative electrode can be used, for example. The shape and thickness of the positive electrode current collector can be selected according to the shape and the range for the positive electrode current collector, respectively.

Examples of the material of the positive electrode current collector (conductive sheet) include a metal material containing Al, Ti, or Fe, for example. The metal material may be Al, an Al alloy, Ti, a Ti alloy, or an Fe alloy, for example. The Fe alloy may be stainless steel (SUS).

The thickness of the positive electrode current collector is not particularly limited, and is, for example, 5 µm or more and 300 µm or less.

### (Nonaqueous Electrolyte)

The nonaqueous electrolyte having lithium ion conductivity may be a liquid electrolyte (electrolyte solution), a gel electrolyte, or a solid electrolyte. The liquid electrolyte is an electrolyte solution containing a nonaqueous solvent and a lithium salt dissolved in the nonaqueous solvent, for example. The concentration of the lithium salt in the electrolyte solution is 0.5 mol/L or more and 2 mol/L or less, for example. The electrolyte solution may contain a known additive.

The gel electrolyte contains a lithium salt and a matrix polymer, or contains a lithium salt, a nonaqueous solvent, and a matrix polymer. As the matrix polymer, a polymer material that absorbs the nonaqueous solvent to gel is used, for example. Examples of the polymer material include fluorocarbon resin, acrylic resin, polyether resin, and polyethylene oxide.

As the solid electrolyte, a material (e.g., an oxide-based solid electrolyte, a sulfide-based solid electrolyte, or a halide-based solid electrolyte) known in the field of all-solid-state lithium-ion secondary batteries is used, for example.

The liquid nonaqueous electrolyte is prepared by dissolving a lithium salt in a nonaqueous solvent. The lithium salt dissolves in the nonaqueous solvent to form lithium ions and anions.

Examples of the anions include BF₄⁻, ClO₄⁻, PF₆⁻, CF₃SO₃⁻, CF₃CO₂⁻, anions of imides, and anions of oxalate complexes. Examples of the anions of the imides include N(SO₂CF₃)₂⁻ and N(CₘF₂ₘ₊₁SO₂)ₓ(CₙF₂ₙ₊₁SO₂)_{y}⁻ (m and n are each independently 0 or an integer of 1 or more, x and y are each independently 0, 1 or 2, and x + y = 2 is satisfied). The anions of the oxalate complexes may contain either or both boron and phosphorus. Examples of the anions of the oxalate complexes include a bis(oxalate)borate anions, difluoro(oxalate)borate anions (BF₂(C₂O₄)⁻), PF₄(C₂O₄)⁻, and PF₂(C₂O₄)₂⁻. The nonaqueous electrolyte may contain one type of anions alone among these or may contain two or more types thereof.

From the viewpoint of suppressing the deposition of lithium metal in a dendrite state, the nonaqueous electrolyte preferably contains at least anions of an oxalate complex, and desirably contains oxalate complex anions having fluorine. By the interaction between lithium and the oxalate complex anions having fluorine, lithium metal is likely to deposit uniformly in a fine particle form. As a result, local deposition of the lithium metal is likely to be suppressed. The oxalate complex anions having fluorine may be used in combination with another type of anions. The other type of anions may be anions of either or both PF₆⁻ and an imide.

Examples of the nonaqueous solvent include esters, ethers, nitrites, amides, and halogenated substituents of these. The nonaqueous electrolyte may contain one of these nonaqueous solvents alone, or may contain two or more thereof. Examples of the halogenate substituents include fluorides.

Examples of the esters include carbonate esters and carboxylic acid esters. Examples of cyclic carbonate esters include ethylene carbonate, propylene carbonate, and fluoroethylene carbonate (FEC). Examples of chain carbonate esters include dimethyl carbonate (DMC), ethyl methyl carbonate (EMC), and diethyl carbonate. Examples of cyclic carboxylic acid esters include γ-butyrolactone and γ-valerolactone. Examples of chain carboxylic acid esters include ethyl acetate, methyl propionate, and methyl fluoropropionate.

Examples of the ethers include cyclic ethers and chain ethers. Examples of the cyclic ethers include 1,3-dioxolane, 4-methyl-1,3-dioxolane, tetrahydrofuran, and 2-methyltetrahydrofuran. Examples of the chain ethers include 1,2-dimethoxyethane, diethyl ether, ethyl vinyl ether, methyl phenyl ether, benzyl ethyl ether, diphenyl ether, dibenzyl ether, 1,2-diethoxyethane, and diethylene glycol dimethyl ether.

The concentration of the lithium salt in the nonaqueous electrolyte is 0.5 mol/L or more and 3.5 mol/L or less, for example. The concentration of the anions in the nonaqueous electrolyte may be set to 0.5 mol/L or more and 3.5 mol/L or less. The concentration of the anions of an oxalate complex in the nonaqueous electrolyte may be set to 0.05 mol/L or more and 1 mol/L or less.

The nonaqueous electrolyte may contain an additive. The additive may be one that forms a coating film on the negative electrode. As a result of a coating film derived from the additive being formed on the negative electrode, generation of dendrites is likely to be suppressed. Examples of such an additive include vinylene carbonate, FEC, and vinyl ethyl carbonate (VEC).

Hereinafter, examples of the lithium secondary battery according to the present embodiment is described in detail with reference to the drawings. The above-described constituent elements can be applied to the constituent elements of the exemplary lithium secondary batteries described below. Further, the constituent elements of the examples described below can be altered based on the above description. Further, the matters described below may be applied to the above-described embodiments. In the lithium secondary batteries described below, a constituent element that is not essential to the lithium secondary battery according to the present disclosure may be omitted. In the following drawings, the scale of components is changed to facilitate understanding.

### (First Embodiment)

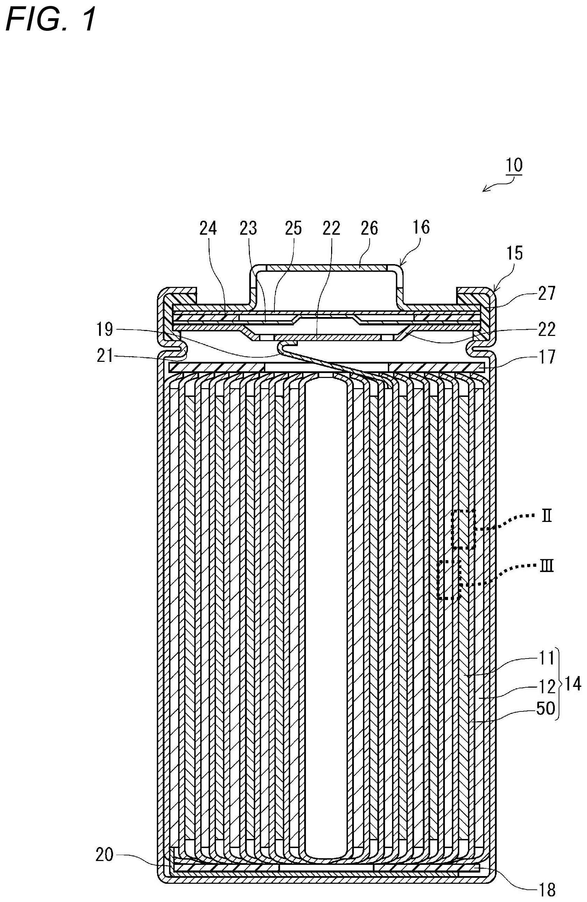

FIG. 1 is a schematic longitudinal cross-sectional view of an example of a lithium secondary battery according to a first embodiment. In FIG. 1, the spacer and space formed by the spacer are omitted. A cylindrical lithium secondary battery 10 illustrated in FIG. 1 includes a cylindrical battery case and a wound electrode group 14 and a nonaqueous electrolyte (not illustrated) each housed in the battery case. The battery case includes a case main body 15 that is a bottomed cylindrical metal container, and a sealing body 16 that seals the opening of the case main body 15. A gasket 27 is provided between the case main body 15 and the sealing body 16. The gasket 27 ensures that the battery case is sealed. In the case of main body 15, insulation plates 17 and 18 are provided at the respective ends of the electrode group 14 in the winding axis direction.

The case main body 15 has a step 21 formed, for example, by partially pressing the side wall of the case main body 15 from the outside. The step 21 may be formed in an annular shape on the side wall of the case main body 15 along the circumference of the case main body 15. In this case, the sealing body 16 is supported on the surface of the step 21 on the side of the opening.

The sealing body 16 includes a filter 22, a lower valve body 23, an insulating member 24, an upper valve body 25, and a cap 26. In the sealing body 16, these members are stacked in the stated order. The sealing body 16 is attached to the opening of the case main body 15 such that the cap 26 is located outside the case main body 15 and the filter 22 is located inside the case main body 15. Each of the above-described members constituting the sealing body 16 has a disk shape or a ring shape, for example. The lower valve body 23 and the upper valve body 25 are connected to each other at their central parts, and the insulating member 24 is located between their peripheral parts. The filter 22 and the lower valve body 23 are connected to each other at their central parts. The upper valve body 25 and the cap 26 are connected to each other at their central parts. That is, these members except the insulating member 24 are electrically connected to each other.

A non-illustrated vent hole is formed in the lower valve body 23. In the above configuration, when the internal pressure of the battery case increases due to abnormal heat generation or the like, the upper valve body 25 bulges toward the cap 26 to separate from the lower valve body 23. As a result, electrical connection between the lower valve body 23 and the upper valve body 25 is cut off. When the internal pressure further increases, the upper valve body 25 is broken to release gas from a non-illustrated opening formed in the cap 26.

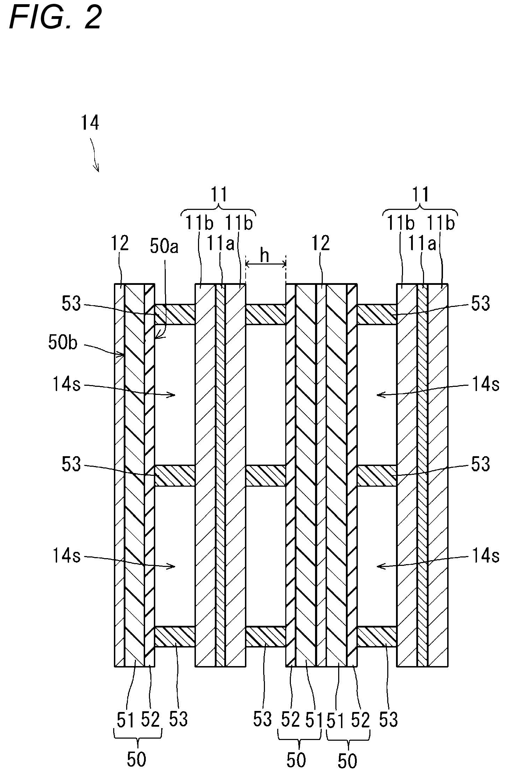

FIG. 2 is an enlarged view of a part of the electrode group 14. FIG. 2 illustrate a part near the positive electrode surrounded by a region II of FIG. 1 and a part near the negative electrode surrounded by a region III of FIG. 1.

The electrode group 14 includes a positive electrode 11, a negative electrode 12, and a separator (a substrate 50 and a spacer 53). The positive electrode 11, the negative electrode 12, and the substrate 50 of the separator each have a band shape. The electrode group 14 is formed by winding the positive electrode 11, the negative electrode 12, and the separator (the substrate 50) such that the separator is positioned between the positive electrode 11 and the negative electrode 12.

The positive electrode 11 includes a positive electrode current collector 11a and a positive electrode mixture layer 11b. The positive electrode current collector 11a is electrically connected via a positive electrode lead 19 to the cap 26 that functions as a positive electrode terminal. FIG. 2 illustrates, as the negative electrode 12, a negative electrode (negative electrode current collector) on which no lithium metal deposits. The negative electrode 12 is electrically connected via a negative electrode lead 20 to the case main body 15 that functions as a negative electrode terminal.

The substrate 50 has a main surface 50a that faces the positive electrode 11 and a main surface 50b that faces the negative electrode 12. The substrate 50 of the first embodiment includes a porous sheet 51 and a composite material layer 52 (heat resistant layer). The composite material layer 52 is formed on a main surface of the two main surfaces of the porous sheet 51 located on the side of the negative electrode 12. In the first embodiment, the spacer 53 is formed on the main surface 50a that faces the positive electrode 11. The spacer 53 is formed on the composite material layer 52 and is in contact with the positive electrode 11. The spacer 53 forms a space 14s between the positive electrode 11 and the negative electrode 12 (between the negative electrode 12 and the substrate 50). FIG. 2 indicates a height h of the spacer 53.

In FIG. 2, the spacer 53 is positioned on the main surface 50a of the substrate 50 located on the side of the positive electrode 11, but may be positioned on the main surface 50b of the substrate 50 located on the side of the negative electrode 12. The spacer 53 is formed on the composite material layer 52, but may be formed on the porous sheet 51. The composite material layer 52 of the substrate 50 is located on the side of the positive electrode 11, but may be located on the side of the negative electrode 12.

In the lithium secondary battery 10, lithium metal deposits on the negative electrode 12 during charging. Since the space 14s is present between the positive electrode 11 and the negative electrode 12, the volume change of the electrode group 14 due to the deposition of lithium metal is reduced and cycle characteristics are improved.

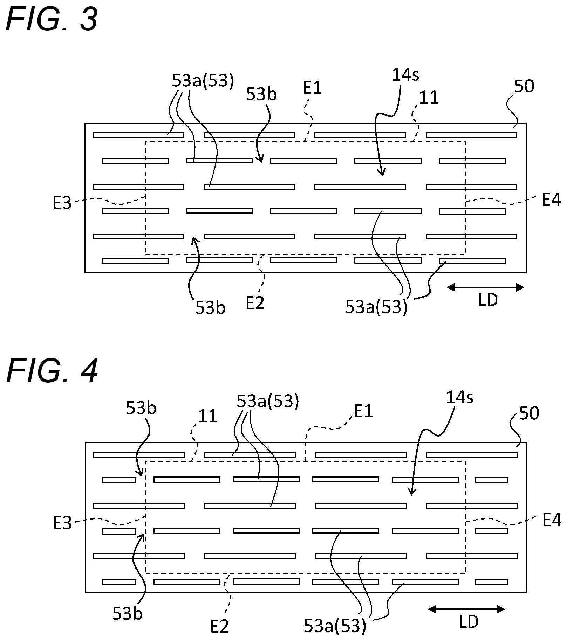

Here, FIGS. 3 to 7 illustrates examples of the planar shape of the spacer 53. In a plan view, the spacer 53 (line-shaped protrusions 53a) is positioned on one of the main surfaces of the substrate 50. The substrate 50 on which the spacer 53 (protrusions 53a) is positioned is positioned on each of the inner circumferential side and the outer circumferential side of the positive electrode 11. In the drawings, the positive electrode 11 facing the substrate 50 is indicated by the broken lines. Note that the drawings are schematic diagrams, and the dimensional ratios of the respective members between the vertical and horizontal directions do not necessarily reflect actual ones.

The spacers 53 in FIGS. 3 to 5 include a plurality of line-shaped protrusions 53a arranged in stripes. The region where the spacer 53 is not formed constitutes the space 14s. The plurality of line-shaped protrusions 53a are arranged in parallel to the length direction (LD direction) of the band-shaped substrate 50. The plurality of line-shaped protrusions 53a are spaced apart from each other. The plurality of line-shaped protrusions 53a are positioned intermittently and each have blank portions 53b.

In FIGS. 3 to 5, six line-shaped protrusions 53a are arranged, but the number of line-shaped protrusions 53a is not limited thereto. The blank portions in FIGS. 3 to 5 may be provided at random, or may be provided in a specific repeating pattern.

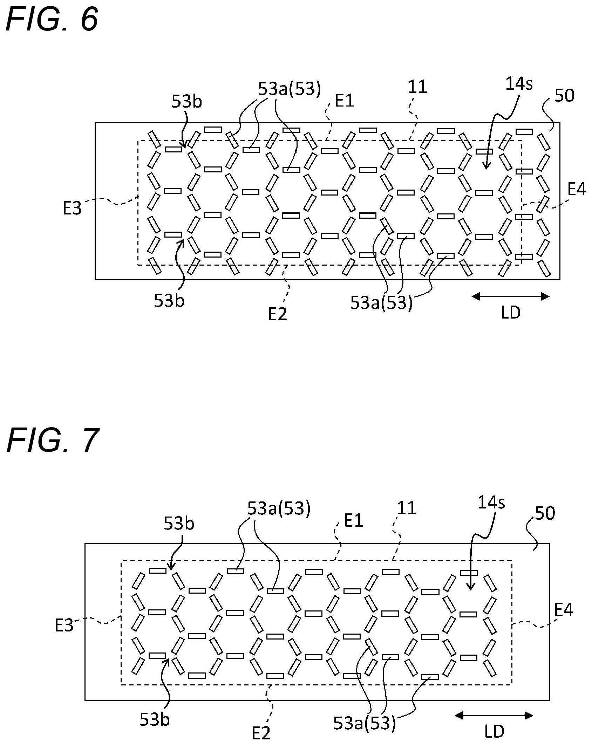

The spacers 53 in FIGS. 6 and 7 each include line-shaped protrusions 53a arranged in a honeycomb pattern. The region where the spacer 53 is not formed constitutes the space 14s. The line-shaped protrusions 53a are intermittently positioned and have blank portions 53b.

In FIGS. 6 to 7, the line-shaped protrusions corresponding to the sides of the hexagons each have blank portions at the respective ends thereof, but may have a blank portion at the central part thereof. An edge E3 of the positive electrode does not overlap any of the line-shaped protrusions 53a in FIG. 6. However, the line-shaped protrusions may be arranged such that an edge E4 of the positive electrode does not overlap the line-shaped protrusions.

The broken lines in FIGS. 3 to 7 each indicate the positive electrode 11 facing the substrate 50. That is, the broken lines in FIGS. 3 to 7 each indicate the contour of the outer shape of the positive electrode 11 facing the substrate 50. The area of the region surrounded by the broken line in each drawing (the area where the substrate 50 faces the positive electrode mixture layer 11b) is the area S of the region A where the substrate 50 faces the positive electrode 11. The length of the broken line (the total length of the edges of the positive electrode mixture layer 11b along the outer shape of the positive electrode 11) in each drawing is the total length L of the edges along the outer shape of the positive electrode 11. The protrusions 53a are positioned on the substrate 50 so as to satisfy the relationship of Y < X, where X denotes the ratio: St/S of the total area St of parts At where the region A (the region surrounded by the broken line in each drawing) and the protrusions 53a overlap each other to the area S, and Y denotes a ratio: Lt/L of the total length Lt of the parts where the edges (broken line in each drawing) of the positive electrode 11 and the protrusions 53a overlap each other to the above-described total length L.

The broken lines in FIGS. 3 to 7 each indicate the outer shape of the rectangle of the positive electrode 11 in a plan view. The positive electrode 11 has four edges E1 to E4 corresponding to the respective four sides of the rectangle. Specifically, the positive electrode 11 has edges E1 and E2 corresponding to the two sides extending in the LD direction, and edges E3 and E4 corresponding to the two sides extending in the width direction.

Yn denotes a ratio: Lnt/Ln of the total length Lnt of at least one part where one edge En selected from the edges E1 to E4 and the protrusions overlap each other to the length Ln of the edge En, where n is an integer from 1 to 4. It is preferable that the relationship of Yn < X is satisfied in any of the cases where n is 1 to 4. In the cases of FIGS. 3 to 7, it is easy to obtain a spacer that satisfies the relationship of Yn < X even in any of the cases where n is 1 to 4.

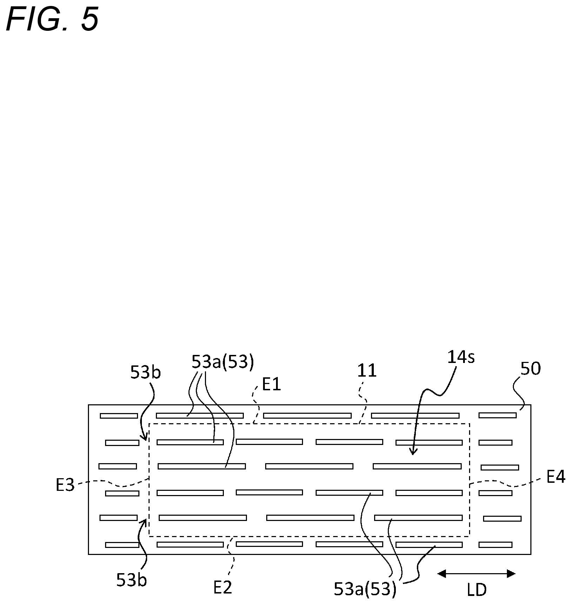

Y1 to Y4 respectively denote the values of Yn corresponding to the edges E1 to E4 (n is 1 to 4). In FIGS. 3 to 5, Y1 and Y2 are 0. As illustrated in FIGS. 3 to 5, it is preferable that the edges E1 and E2 of the positive electrode and the line-shaped protrusions 53a do not overlap along the LD direction. Y3 and Y4 are in the relationship of FIG. 5 < FIG. 4 < FIG. 3, and all of Y1 to Y4 are 0 in FIG. 5. Each of the edges E3 and E4 overlaps four line-shaped protrusions in FIG. 3, overlaps two line-shaped protrusions in FIG. 4, and overlap none of the line-shaped protrusions in FIG. 5. As illustrated in FIGS. 4 and 5, Y3 and Y4 may be adjusted by providing blank portions 53b in the protrusions 53a.

Y3 is 0 in FIG. 6, and all of Y1 to Y4 are 0 in FIG. 7. As illustrated in FIGS. 6 and 7, Yn may be set to 0 by forming no protrusions on the outer side of the edges En of the positive electrode 11 (the outer side of the region A).

In FIGS. 3 to 7, the spacer is provided in a stripe pattern or a honeycomb pattern, but the placement pattern of the spacer is not limited thereto. The spacer may be formed in a dot pattern, for example. For connection to the positive electrode lead, the positive electrode in FIGS. 3 to 7 may have a current collector exposed portion where the positive electrode mixture layer is not supported at the central portion in the LD direction along the width direction. In this case, the current collector exposed portion is included in neither the region A nor the edges E1 and E2.

In the first embodiment, a cylindrical lithium secondary battery including a wound electrode group has been described. However, the lithium secondary battery of the present embodiment is not limited to the first embodiment, and is applicable to other aspects. The shape of the lithium secondary battery can be appropriately selected from various shapes such as cylindrical shape, coin shape, prismatic shape, sheet shape, and flat shape, depending on, for example, the application. The aspect of the electrode group is not particularly limited, and the electrode group may be of stacked type.

### (Supplemental Note)

According to the above description of the embodiments, the following techniques are disclosed.

### (Technique 1)

A lithium secondary battery including:
a positive electrode; a negative electrode; a separator provided between the positive electrode and the negative electrode; and a nonaqueous electrolyte,
wherein in the negative electrode, lithium metal deposits during charging and the lithium metal dissolves during discharging,
the separator includes a substrate having a sheet shape and a spacer provided on one or both of main surfaces of the substrate,
the spacer includes protrusions, and
a relationship of Y < X is satisfied, where X denotes a ratio: St/S of a total area St of at least one part At where a region A and the protrusions overlap each other to an area S of the region A, the region A being a region where the substrate faces the positive electrode, and Y denotes a ratio: Lt/L of a total length Lt of at least one part where the protrusions and any of edges of the positive electrode along an outer shape of the positive electrode overlap each other to a total length L of the edges.

### (Technique 2)

The lithium secondary battery according to Technique 1, wherein Y is 0 or more and 0.4 or less.

### (Technique 3)

The lithium secondary battery according to Technique 1 or 2, wherein in a plan view, the positive electrode has an outer shape of a rectangle,
the edges of the positive electrode include first to fourth edges corresponding to respective four sides of the rectangle, and
where Yn denotes a ratio: Lnt/Ln of a total length Lnt of at least one part where an n-th edge and the protrusions overlap each other to a length Ln of the n-th edge, the n-th edge being one of the edges selected from the first to fourth edges, a relationship of Yn < X is satisfied even when n is 1 to 4.

### (Technique 4)

The lithium secondary battery according to Technique 3, wherein Yn is 0 or more and 0.4 or less even when n is 1 to 4.

### (Technique 5)

The lithium secondary battery according to any one of Techniques 1 to 4, wherein the positive electrode includes a positive electrode current collector and a positive electrode mixture layer supported on both sides of the positive electrode current collector, and
the protrusions are arranged so as not to overlap with edges of the positive electrode mixture layer.

### (Technique 6)

The lithium secondary battery according to any one of Techniques 1 to 5, wherein the spacer is positioned on one or both of the main surfaces of the substrate that is located on a side of the positive electrode.

### (Technique 7)

The lithium secondary battery according to any one of Techniques 1 to 6, wherein the spacer includes the protrusions, the protrusions being arranged in a predetermined repeating pattern.

### (Technique 8)

The lithium secondary battery according to any one of Techniques 1 to 7, wherein the spacer includes the line-shaped protrusions, the line-shaped protrusions being arranged intermittently.

### (Technique 9)

The lithium secondary battery according to any one of Techniques 1 to 8, wherein the spacer contains a resin material.

### (Technique 10)

The lithium secondary battery according to any one of Techniques 1 to 9, wherein the spacer has a non-porous structure that does not allow lithium ion permeation.

### (Technique 11)

The lithium secondary battery according to any one of Techniques 1 to 10, wherein the substrate includes a porous sheet containing a polymer material.

### (Technique 12)

The lithium secondary battery according to Technique 11, wherein the substrate further includes a composite material layer containing a resin material and inorganic particles.

### [Examples]

Hereinafter, the lithium secondary battery according to the present disclosure is described in more detail based on examples and comparative examples. However, the present disclosure is not limited to the following examples.

### <<Batteries A1 to A3 and B1>>

### (Positive Electrode Preparation)

A positive electrode mixture slurry was prepared by mixing a positive electrode active material, acetylene black (AB; conductive material), polyvinylidene fluoride (PVdF; binder), and an appropriate amount of N-methyl-2-pyrrolidone (NMP). A lithium-containing transition metal oxide (NCA: positive electrode active material) of the rock-salt type having a layered structure and containing Li, Ni, Co, and Al (the molar ratio of Li to the sum of Ni, Co and Al is 1.0) was used as the positive electrode active material. The mass ratio NCA:AB:PVdF in the positive electrode mixture slurry was set to 95:2.5:2.5. The positive electrode mixture slurry was applied onto both sides of a band-shaped Al foil (a positive electrode current collector), and the coated film was dried and rolled to form positive electrode mixture layers. The positive electrode current collector with the positive electrode mixture layers formed on both sides thereof was cut to a predetermined size to obtain a positive electrode.

### (Negative Electrode Current Collector Preparation)

A band-shaped electrolytic copper foil (12 µm thick) was prepared as a negative electrode current collector.

### (Substrate Preparation)

A polyethylene-made microporous thin film having a thickness of 10 µm was prepared. A coating liquid containing paraphenylene terephthalamide being an aromatic polyamide as a resin material and alumina as inorganic particles was applied onto one of the main surfaces of the microporous thin film. Using a solution of N-methyl-2-pyrrolidone in which calcium chloride was dissolved at a concentration of 5.8% by mass, the coating liquid was prepared so that the concentration of the aromatic polyamide reached 2% by weight and the concentration of the alumina reached 4% by weight. The microporous thin film with the coated film formed thereon was left to stand in an atmosphere at a relative humidity of 70% and a temperature of 25°C for 1 hour to allow the aromatic polyamide to deposit. Next, NMP and calcium chloride in the coated film were removed by washing with water. The coated film was subjected to drying at 60°C for 5 minutes. Thus, a composite material layer (heat resistant layer) was formed. In the manner described above, a substrate including the microporous thin film and the composite material layer was obtained.

### (Formation of Spacer on Main Surface of Substrate)

A coating liquid containing polyvinylidene fluoride and alumina particles (an inorganic filler) was applied onto the surface of the microporous thin film of the substrate, and the coated film was dried. Thus, a spacer having a pattern (stripe pattern) illustrated in FIG. 3, 4, 5, or 8 was formed. In the manner described above, a separator including the substrate and the spacer was obtained. Line-shaped protrusions constituting the spacer were set to have a width of 0.25 mm and a height of 30 µm. The line-shaped protrusions were arranged intermittently.

### (Nonaqueous Electrolyte Preparation)

An ether-based mixed solvent containing 1,2-dimethoxyethane (DME) and 1,1,2,2-tetrafluoroethyl 2,2,2-trifluoroethyl ether (CHF₂(CF₂OCH₂)CF₃) in a volume ratio of 1:2 were prepared. A liquid nonaqueous electrolyte (ether-based liquid electrolyte) was prepared by dissolving lithium bis(fluorosulfonyl)imide (LiFSI) and LiBF₂(C₂O₄) in the mixed solvent so that their concentrations reached 1 mol/L and 0.1 mol /L, respectively.

### (Battery Assembly)

The positive electrode and the negative electrode current collector were spirally wound with the separator therebetween in an inert gas atmosphere to produce an electrode group. In the manner described above, a wound electrode group having the configuration illustrated in FIG. 2 was obtained. In doing so, the electrode group was formed such that the separator (the substrate with the spacer located thereon) illustrated in FIG. 3, 4, 5, or 8 was located on each of the inner peripheral side and the outer peripheral side of the positive electrode. The positional relationship between the positive electrode and the line-shaped protrusions arranged on each of the inner peripheral side and the outer peripheral side of the positive electrode was set to the positional relationship illustrated in FIG. 3, 4, 5, or 8. The separator was positioned such that the main surface of the substrate on which the spacer was formed faced the positive electrode.

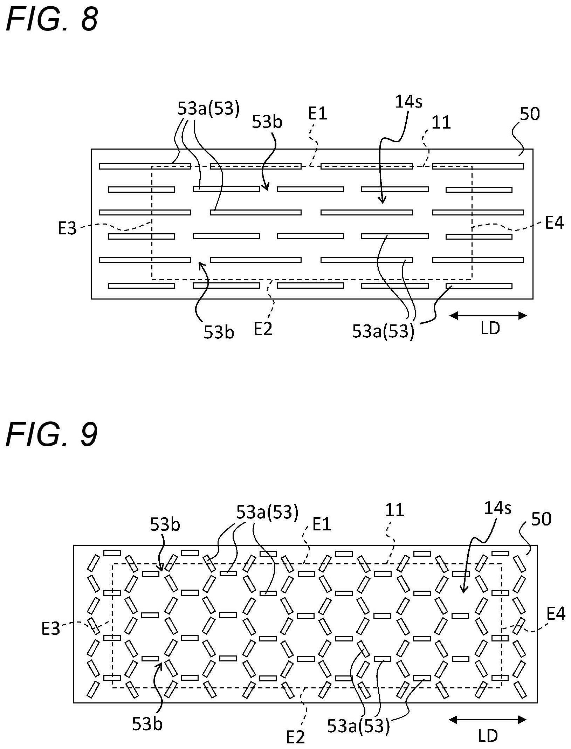

The values of X and Y were set to any of the values shown in Table 1. In FIG. 8, as compared with FIGS. 3 to 5, parts where the positive electrode edges and the protrusions 53a overlap each other were increased and Y was 0.42. The largest value of Yn is 0.02 as Y3 and Y4 corresponding to E3 and E4 in FIG. 3, and 0.01 for Y3 and Y4 corresponding to E3 and E4 in FIG. 4, and 0.875 for Y1 corresponding to E1 in FIG. 8. In FIG. 5, all of Y1 to Y4 corresponding to E1 to E4 were 0.

The electrode group was housed in a bottomed cylindrical case body, and the nonaqueous electrolyte was injected thereinto. A sealing body was placed on the opening of the case body with a gasket placed thereon, and the electrode group and the nonaqueous electrolyte were sealed in the battery case. In the manner described above, a lithium secondary battery having the configuration illustrated in FIG. 1 was completed. A1 to A3 in Table 1 are examples and B1 is comparative example.

### <<Batteries A4, A5, and B2>>

A spacer having a pattern (honeycomb pattern) illustrated in FIG. 6, 7, or 9 was formed using a dispenser. An electrode group was formed such that the separator (the substrate on which the spacer was formed) illustrated in FIG. 6, 7, or 9 was positioned on each of the inner peripheral side and the outer peripheral side of the positive electrode. The positional relationship between the positive electrode and the line-shaped protrusions arranged on each of the inner peripheral side and the outer peripheral side of the positive electrode was set to the positional relationship illustrated in FIG. 6, 7, or 9.

The values of X and Y were set to the values shown in Table 1. In FIG. 9, as compared with FIGS. 6 and 7, parts where the positive electrode edges and the protrusions 53a overlap each other were increased and Y was 0.14. In FIG. 6, the largest value of Yn was 0.04 for Y1 and Y2 corresponding to E1 and E2. Each value of Y1 to Y4 corresponding to E1 to E4 was 0 in FIG. 7, and each value of Y1 to Y4 corresponding to E1 to E4 was 0.14 in FIG. 9.

Batteries A4, A5, and B2 were prepared in the same manner as in the battery A1, except for the above. A4 and A5 in Table 1 are examples and B2 is a comparative example.

### [Evaluation]

### (Charging and Discharging Test)

Each of the obtained batteries was subjected to a charging and discharging test. In the charging and discharging test, the battery was charged in a thermostatic bath set at 25°C under the following conditions, and then discharged under the following conditions after a 20-minute pause.

### (Charging)

Constant current charging was performed at a current of 10 mA per unit area (square centimeter) of the electrode until the battery voltage reached 4.1 V. Thereafter, constant voltage charging was performed at the voltage of 4.1 V until the current per unit electrode area reached 1 mA.

### (Discharge)

Constant current discharging was performed at a current of 10 mA per unit area (square centimeter) of the electrode until the battery voltage reached 3.0 V.

A cycle of the charging and the discharging was performed repeatedly. When the charge capacity in the m-th cycle increased by 1% or more relative to the charge capacity in the (m-1) cycle, which precedes the m-th cycle by one, it was determined that abnormal charging has occurred due to occurrence of a minute internal short circuit, and the charging and discharging test was terminated. The number m of cycles at that time was determined as the cycle number at which the abnormality has occurred. The charging and discharging were repeatedly performed until the discharge capacity reached 90% of the discharge capacity in the first cycle. When no abnormal charging has occurred, it was determined to be non-occurrence of abnormality.

The evaluation results are shown in Table 1.

**[Table 1]**

| Battery | Configuration | Spacer | X | Y | Yn (largest value) | Cycle number at abnormality occurrence |
|---|---|---|---|---|---|---|
| A1 | Positive electrode/Spacer/ Substrate/Negative electrode | FIG. 3 (stripe pattern) | 0.14 | 0.02 | 0.02 | 153 |
| A2 | Positive electrode/Spacer/ Substrate/Negative electrode | FIG. 4 (stripe pattern) | 0.14 | 0.01 | 0.01 | 201 |
| A3 | Positive electrode/Spacer/ Substrate/Negative electrode | FIG. 5 (stripe pattern) | 0.14 | 0 | 0 | No abnormality |
| A4 | Positive electrode/Spacer/ Substrate/Negative electrode | FIG. 6 (honeycomb pa ttern) | 0.14 | 0.04 | 0.04 | 162 |
| A5 | Positive electrode/Spacer/ Substrate/Negative electrode | FIG. 7 (honeycomb pa ttern) | 0.14 | 0 | 0 | No abnormality |
| B1 | Positive electrode/Spacer/ Substrate/Negative electrode | FIG. 8 (stripe pattern) | 0.14 | 0.42 | 0.875 | 50 |
| B2 | Positive electrode/Spacer/ Substrate/Negative electrode | FIG. 9 (honeycomb pa ttern) | 0.14 | 0.14 | 0.14 | 89 |

In the batteries A1 to A5, the cycle number at which the abnormality has occurred is larger and the occurrence of a minute internal short circuit was suppressed more than in the batteries B1 and B2. In particular, in the batteries A3 and A5, no abnormality occurred, and pronounced effect of suppressing the occurrence of inner short circuits was achieved.

### [Industrial Applicability]

The lithium secondary battery of the present disclosure can be used in electronic devices such as mobile phones, smart phones, and tablet terminals, electric vehicles including hybrid and plug-in hybrid vehicles, and household storage batteries combined with solar cells.

Although the present invention has been described in terms of the presently preferred embodiments, it is to be understood that such a disclosure is not to be interpreted as limiting. Various alterations and modifications will no doubt become apparent to those skilled in the art to which the present invention pertains, after having read the above disclosure. Accordingly, it is intended that the appended claims be interpreted to cover all alterations and modifications as fall within the true spirit and scope of the invention.

### [Reference Signs List]

10: lithium secondary battery, 11: positive electrode, 12: negative electrode, 14: electrode group, 14s: space, 15: case body, 16: sealing body, 23: lower valve body, 25: upper valve body, 50: substrate, 51: porous sheet, 52: composite material layer, 53: spacer, 53a: protrusion, 53b: blank portion

## Claims

1. A lithium secondary battery comprising:
a positive electrode; a negative electrode; a separator provided between the positive electrode and the negative electrode; and a nonaqueous electrolyte,
wherein in the negative electrode, lithium metal deposits during charging and the lithium metal dissolves during discharging,
the separator includes a substrate having a sheet shape and a spacer provided on one or both of main surfaces of the substrate,
the spacer includes protrusions, and
a relationship of Y < X is satisfied, where X denotes a ratio: St/S of a total area St of at least one part At where a region A and the protrusions overlap each other to an area S of the region A, the region A being a region where the substrate faces the positive electrode, and Y denotes a ratio: Lt/L of a total length Lt of at least one part where the protrusions and any of edges of the positive electrode along an outer shape of the positive electrode overlap each other to a total length L of the edges.

2. The lithium secondary battery according to claim 1,
wherein Y is 0 or more and 0.4 or less.

3. The lithium secondary battery according to claim 1,
wherein in a plan view, the positive electrode has an outer shape of a rectangle,
the edges of the positive electrode include first to fourth edges corresponding to respective four sides of the rectangle, and
where Yn denotes a ratio: Lnt/Ln of a total length Lnt of at least one part where an n-th edge and the protrusions overlap each other to a length Ln of the n-th edge, the n-th edge being one of the edges selected from the first to fourth edges, a relationship of Yn < X is satisfied even when n is 1 to 4.

4. The lithium secondary battery according to claim 3,
wherein Yn is 0 or more and 0.4 or less even when n is 1 to 4.

5. The lithium secondary battery according to claim 1,
wherein the positive electrode includes a positive electrode current collector and a positive electrode mixture layer supported on both sides of the positive electrode current collector, and
the protrusions are arranged so as not to overlap with edges of the positive electrode mixture layer.

6. The lithium secondary battery according to any one of claims 1 to 5,
wherein the spacer is positioned on one or both of the main surfaces of the substrate that is located on a side of the positive electrode.

7. The lithium secondary battery according to any one of claims 1 to 5,
wherein the spacer includes the protrusions, the protrusions being arranged in a predetermined repeating pattern.

8. The lithium secondary battery according to any one of claims 1 to 5,
wherein the spacer includes the line-shaped protrusions, the line-shaped protrusions being arranged intermittently.

9. The lithium secondary battery according to any one of claims 1 to 5,
wherein the spacer contains a resin material.

10. The lithium secondary battery according to any one of claims 1 to 5,
wherein the spacer has a non-porous structure that does not allow lithium ion permeation.

11. The lithium secondary battery according to any one of claims 1 to 5,
wherein the substrate includes a porous sheet containing a polymer material.

12. The lithium secondary battery according to claim 11,
wherein the substrate further includes a composite material layer containing a resin material and inorganic particles.
